(19) **Europäisches Patentamt**

**European Patent Office**

**Office européen des brevets**

(11) Veröffentlichungsnummer : **0 412 481 B1**

(12) # EUROPÄISCHE PATENTSCHRIFT

(45) Veröffentlichungstag der Patentschrift :
**03.11.93 Patentblatt 93/44**

(21) Anmeldenummer : **90115079.7**

(22) Anmeldetag : **06.08.90**

(51) Int. Cl.⁵ : **G01D 5/36**

(54) **Längen- oder Winkelmesseinrichtung.**

(30) Priorität : **20.12.89 DE 3942178**
**08.08.89 DE 3926137**

(43) Veröffentlichungstag der Anmeldung :
**13.02.91 Patentblatt 91/07**

(45) Bekanntmachung des Hinweises auf die
Patenterteilung :
**03.11.93 Patentblatt 93/44**

(84) Benannte Vertragsstaaten :
**AT CH DE FR GB IT LI**

(56) Entgegenhaltungen :
**EP-A- 0 143 525**
**DE-A- 3 412 128**
**MACHINE DESIGN, Band 60, Nr. 15, 23. Juni
1988, Seiten 91-94; K. DENKER: "Precision
and adjustability with proportional pneumatics"**

(73) Patentinhaber : **Dr. Johannes Heidenhain
GmbH
Dr.-Johannes-Heidenhain-Strasse 5 Postfach
1260
D-83292 Traunreut (DE)**

(72) Erfinder : **Ernst, Alfons, Dipl.-Ing.
Traunring 62
D-8225 Traunreut (DE)**

## Beschreibung

Die Erfindung betrifft eine Längen- oder Winkelmeßeinrichtung gemäß dem Oberbegriff des Anspruches 1.

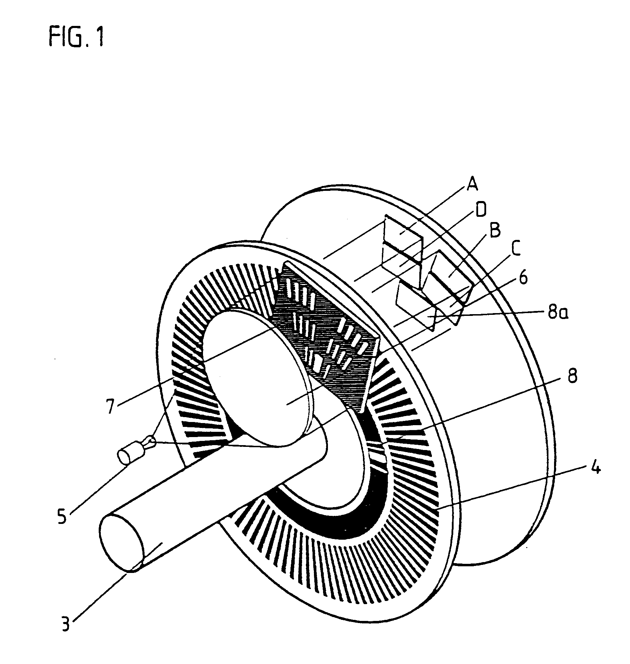

Derartige Meßeinrichtungen (s. Fig. 1) werden insbesondere bei Bearbeitungsmaschinen zur Messung der Relativlage eines Werkzeuges bezüglich eines zu bearbeitenden Werkstückes eingesetzt.

In der Dissertation "Photoelektrische Messung der Änderung von Längen- oder Winkelpositionen mit Hilfe von Beugungsgittern" von F. Hock, Universität Stuttgart 1975, ist in Abb. 86 eine Winkelmeßeinrichtung zur Eliminierung des Exzentrizitätsfehlers der Winkelteilung einer Teilscheibe beschrieben, bei der der Lichtstrahl einer Lichtquelle über einen Kondensor einen Winkelteilungsbereich der Winkelteilung der Teilscheibe durchsetzt und über ein Pentaprisma, ein Umlenkprisma und ein Objektiv einem Wollastonprisma zur Aufspaltung in zwei Teilstrahlen zugeführt wird.

Die beiden Teilstrahlen durchsetzen über ein zweites Objektiv, ein zweites Pentaprisma und ein zweites Umlenkprisma einen dem ersten Winkelteilungsbereich diametral gegenüberliegenden zweiten Winkelteilungsbereich der Winkelteilung der Teilscheibe und beaufschlagen über ein polarisierendes Teilerprisma zwei Photoempfänger. Diese Winkelmeßeinrichtung besitzt wegen der Vielzahl der optischen Elemente große Abmessungen und erfordert einen hohen Montage- und Justageaufwand.

Aus der DE 34 12 128 C1 ist eine Positionsmeßeinrichtung zur Generierung oberwellenfreier periodischer Signale bekannt. Hierzu sind vier Abtastfelder mit den Phasenlagen 0°, 90°, 180° und 270° übereinander angeordnet. Jedes Abtastfeld besteht aus mehreren Teilfeldern, deren Breite in Meßrichtung nach einer Sinusfunktion variiert. Die Abtastsignale der Teilfelder jedes Abtastfeldes werden in einer elektrischen Schaltung zusammengefaßt. Wird diese Anordnung bei einer Winkelmeßeinrichtung eingesetzt, so ändert sich bei einer Exzentrizität die Phasenlage der resultierenden Meßsignale.

Weiterhin ist aus der EP- 0 143 525 A1 eine Meßeinrichtung bekannt, bei der zur Beseitigung von Fehlern infolge unkorrekter Positionierung von Lichtquelle und Lichtempfängern jeweils mehrere Empfänger zusammengeschaltet sind. Mehrere Empfänger gleicher Phasenlage sind hierzu symmetrisch zur zentralen optischen Achse angeordnet. Auch hier ändert sich die Phasenlage der resultierenden Meßsignale aufgrund von Exzentrizitäten.

Ferner ist aus der DE-A1-33 08 841 eine Positionsmeßeinrichtung bekannt, die gegen alle möglicherweise auftretenden systematischen Fehler weitgehend unempfindlich sein soll. Dort wird vorgeschlagen, eine Abtasteinrichtung für einen Maßstab so auszubilden, daß in vier Empfängeranordnungen einzelne Empfängerelemente in unterschiedlicher Reihenfolge eingesetzt sind, wobei die Empfängerelemente einen zusammengeschalteten Block bilden. Da diese Druckschrift den relevanten Stand der Technik repräsentiert, wird im Oberbegriff des Anspruches 1 von dieser Druckschrift ausgegangen, der im wesentlichen auch die Aufgabe zu entnehmen ist, die der vorliegenden Erfindung zugrunde liegt, nämlich eine Anordnung zu schaffen, durch die mit geringem Aufwand Abtastsignale erzeugt werden, die in weiten Grenzen unempfindlich gegen einen - im Falle einer Winkelmeßeinrichtung - umlaufenden Exzentrizitätsvektor der Teilscheibe ist, das heißt, neben der Eliminierung von Phasenfehler sollen auch Unterschiede in den Signalamplituden ausgeglichen werden.

Diese Aufgabe wird von einer Längen- oder Winkelmeßeinrichtung mit den Merkmalen des Anspruches 1 gelöst.

Hinweise auf die kennzeichnenden Merkmale des Anspruches 1 sowie auf die Gegenstände der abhängigen Ansprüche sind der zitierten Druckschrift nicht zu entnehmen.

Die Vorteile der erfindungsgemäßen Längen- oder Winkelmeßeinrichtung liegen darin, daß trotz der relativ hohen Unempfindlichkeit gegen Verdrehung und Exzentrizität die Signalamplituden groß genug und gleichmäßig genug bleiben, um eine sichere Interpolation zu gewährleisten.

Eine Gegenüberstellung vom Stand der Technik zu Ausführungsbeispielen der erfindungsgemäßen Anordnung soll die Erfindung anhand der Figuren noch näher erläutern.

Es zeigt

| | |
|---|---|
| Figur 1 | eine Winkelmeßeinrichtung gemäß dem Stand der Technik; |
| Figur 2 bis 6 | Anordnungen von Abtastfeldern gemäß dem Stand der Technik; |
| Figur 7 bis 9 | Anordnungen von Abtastfeldern gemäß der Erfindung; |
| Figur 10 | ein Blockschaltbild für die Abtastfelder gemäß Figur 7; |
| Figur 11 | eine Abtaststelle mit kreisförmig angeordneten Abtastfeldern; |
| Figur 12 | ein Blockschaltbild für Abtastfelder aus zwei Gruppen; |
| Figur 13 | ein anderes Blockschaltbild für Abtastfelder und |
| Figur 14 | eine Variante einer Abtaststelle ähnlich wie die in Figur 11. |

Die geometrische Anordnung der Abtastfelder dient zur Erzeugung von sinusförmigen Signalen, die zur Nullinie symmetrisch liegen.

Die Erfindung wird bei Winkelmeßeinrichtungen besonders vorteilhaft eingesetzt. In Figur 1 ist eine inkrementale Winkelmeßeinrichtung gemäß dem Stand der Technik gezeigt. Ihre wichtigsten Elemente sind eine Welle 3, Teilscheibe mit Kreisteilung 4, Abtasteinrichtung mit Lichtquelle 5, Kondensor 6, Abtastplatte 7, Photoelemente A, B, C, D und Referenzmarke 8 mit zugehörigem Photoelement 8a.

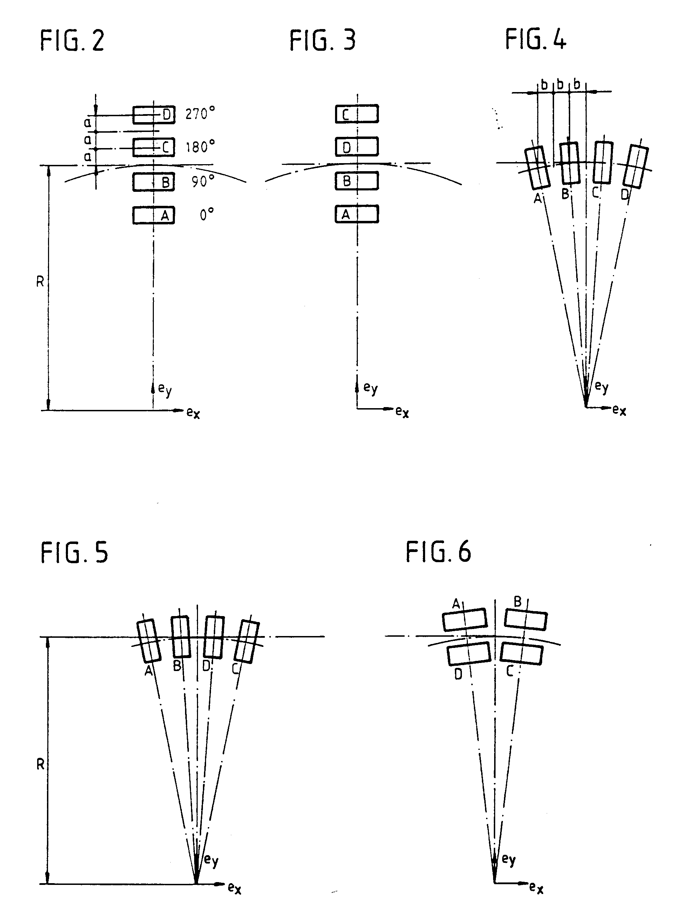

In Figur 2 sind vier Abtastfelder A, B, C, D, deren Phasenlage zueinander 0°, 90°, 180°, 270° beträgt, radial angeordnet. Die Felder A und C sowie die Felder B und D sind jeweils elektrisch zusammengefaßt, so daß zwei Abtastsignale U1 und U2 erzeugt werden, die zur Nullinie symmetrisch und zueinander um 90° phasenverschoben sind. Eine Exzentrizität ex ändert die Phasenlage zwischen den beiden Ausgangssignalen U1, U2 um den Betrag

$$\varphi = 2\pi \cdot ex/C \cdot 2a/R = z \cdot ex/R \cdot 2a/R,$$

wobei

R       der mittlere Teilungsradius,
C       die Teilungsperiode am mittleren Teilungsradius,
z       die Anzahl der Teilungsperioden,
ex      die Exzentrizität in Richtung x,
ey      die Exzentrizität in Richtung y und
2a      der Abstand der Abtastfelder bedeuten.

Bei der Anordnung der Felder A bis D nach Figur 3 verändert sich zwischen den beiden Ausgangssignalen U1, U2 die Phasenlage nicht, jedoch wird das Ausgangssignal U1, das aus den Abtastfeldern A und C gebildet wird, durch eine Exzentrizität ex gegenüber dem Abtastsignal U2 in der Amplitude verkleinert und zwar im Verhältnis:

$$U1/U2 = \cos [3\varphi/2] / \cos (\varphi/2).$$

Bei der Feldanordnung nach Figur 4 und Figur 5 treten im Prinzip die gleichen Fehler auf, jedoch in diesem Fall aufgrund einer Exzentrizität ey.

Nach Figur 4 entsteht ein Phasenversatz $\psi$ zwischen U1 und U2,

$$\psi = 2\pi \cdot ey/C \cdot 2b/R = z \cdot ey/R \cdot 2b/R,$$

wobei mit 2b der Abstand der Abtastfelder bezeichnet ist.

Bei der Anordnung in Figur 5 entsteht eine Amplitudenungleichheit, wenn eine Exzentrizität ey auftritt:

$$U1/U2 = \cos (3\psi/2) / \cos (\psi/2).$$

In Figur 6 schließlich ist eine Feldanordnung dargestellt, bei der weder eine Exzentrizität ex noch eine Exzentrizität ey für sich eine Phasenänderung oder einen Amplitudenunterschied hervorruft, jedoch entstehen unterschiedliche Amplituden, sobald ex und ey gleichzeitig auftreten, d.h., wenn der Exzentrizitätsvektor unter 45° zum mittleren Radiusvektor (Vektor durch die Mitte der Drehachse und die Mitte der Abtaststelle) steht.

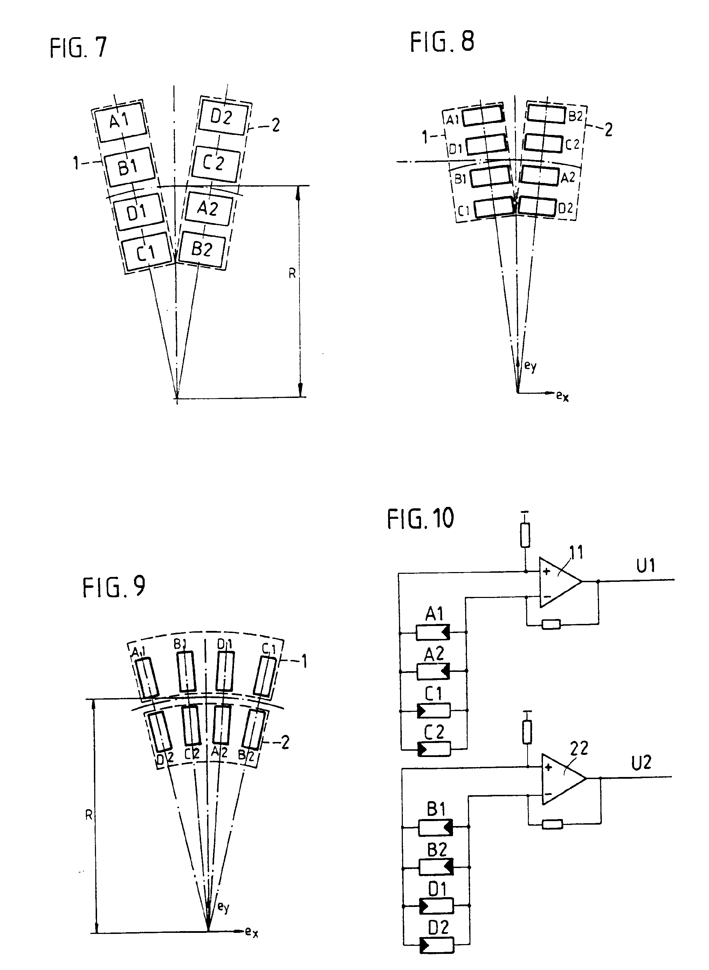

Bei den Anordnungen gemäß der Erfindung, die in den Figuren 7 bis 9 dargestellt sind, ist die doppelte Anzahl von Abtastfeldern A1 bis D2 vorgesehen. Diese Abtastfelder bilden zwei Gruppen 1 und 2 mit Abtastfeldern A1, B1, C1, D1 und A2, B2, C2, D2 derart, daß in jeder Gruppe 1 und 2 von Abtastfeldern A1 bis D2 die Phasenbeziehung zwischen den beiden Ausgangssignalen U1 und U2 nicht verändert wird und die Amplitudenverringerung aufgrund einer Exzentrizität in einer Gruppe 1 das Signal U1 (Felder Ai und Ci) und in der anderen Gruppe 2 das Signal U2 (Felder Bj und Dj) betreffen, so daß sich nach Addition der Signale beider Gruppen 1 und 2 beide Abtastsignale U1, U2 in gleichem Maße verändern und das Amplitudenverhältnis 1:1 erhalten bleibt, oder daß umgekehrt in jeder Gruppe 1 und 2 die Amplituden bei Auftreten von Exzentrizität gleich groß bleiben und die Phasenverschiebungen entgegengesetzt gleich groß sind, so daß sie sich gegenseitig aufheben.

Bei den gezeigten Anordnungen wird daher in einem relativ großen Toleranzbereich weder durch eine Exzentrizität ex noch durch eine Exzentrizität ey oder durch eine Kombination aus beiden Exzentrizitätsvektoren eine Signaländerung bewirkt, die die Interpolationsgenauigkeit beeinträchtigen würde.

Dieser Vorteil wird durch die geometrische Anordnung der Abtastfelder A1 bis D2 gemäß Anspruch 1 und deren Zusammenschaltung in der Weise erzielt, wie unter anderem in Figur 10 dargestellt ist.

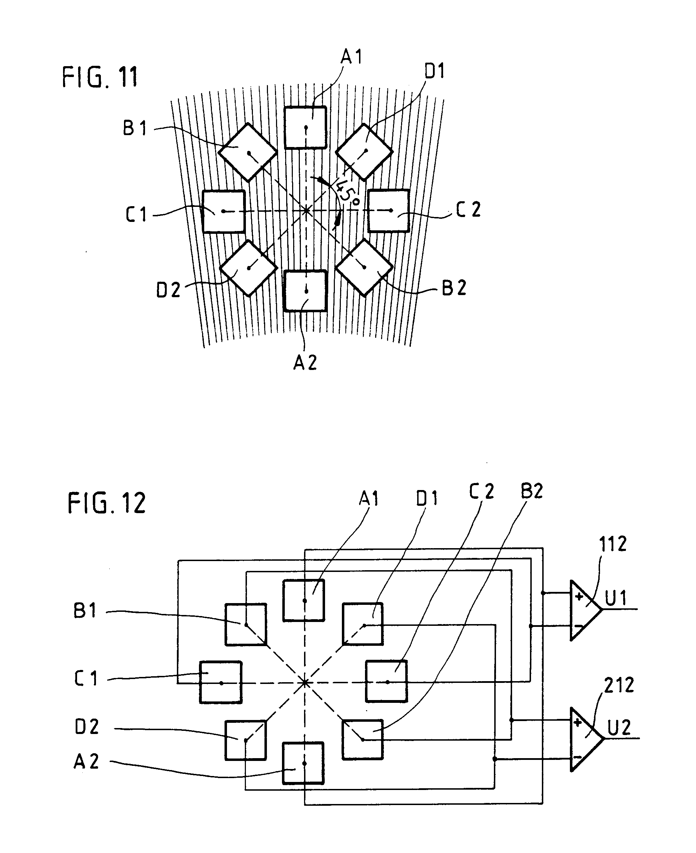

Die geometrische Anordnung der jeweils additiv zusammengeschalteten Elemente kann beispielsweise der Figur 7 entnommen werden, wird aber durch die Beispiele aus den noch zu beschreibenden Figuren 11, 14 und 15 noch verständlicher.

Davon ausgehend, daß gemäß Figur 7 "R" der mittlere Teilungsradius ist, befindet sich das Abtastfeld A1 innerhalb der Gruppe 1 am weitesten außerhalb des Kreises mit dem Teilungsradius R. Das Abtastfeld C1 befindet sich hingegen am weitesten innerhalb dieses Kreises. Die Abtastfelder A1 und C1 sind antiparallel zusammengeschaltet (Figur 10). Zwei Abtastfelder B1 und D1 liegen sich auf beiden Seiten des Kreises mit dem Teilungsradius R gegenüber und sind ihm näher als die Abtastfelder A1 und C1.

Aus der zweiten Gruppe 2 der Abtastfelder liegen sich auf beiden Seiten des Kreises mit dem mittleren Teilungsradius R die Abtastfelder A2 und C2 gegenüber, und zwar in der Weise, daß das Abtastfeld A2 innen und das Abtastfeld C2 außen liegt.

In dieser Gruppe 2 der Abtastfelder bildet das Abtastfeld D2 das äußerste und das Abtastfeld B2 das innerste Abtastfeld.

Die Abtastfelder werden paarweise parallel geschaltet und die Paare werden zueinander antiparallel zusammen geschaltet und zwar in folgender Weise:

Das äußerste Abtastfeld A1 in der einen Gruppe 1 - also das Abtastfeld, welches am weitesten außerhalb des Kreises mit dem Teilungsradius R liegt - wird mit dem gleichnamigen Abtastfeld A2 der jeweils anderen Gruppe 2 parallel zusammengeschaltet, und zwar mit dem, welches im inneren Bereich des Kreises dem zugehörigen gleichnamigen Abtastfeld A1 der jeweils anderen Gruppe 1 am nächsten liegt. Um dies sprachlich kürzer zu fassen, wird vom "nächst inneren" Abtastfeld gesprochen.

Das innerste Abtastfeld C1 der einen Gruppe 1 - also das Abtastfeld, welches am weitesten innerhalb des Kreises mit dem Teilungsradius liegt, wird mit dem gleichnamigen Abtastfeld C2 der jeweils anderen Gruppe 2 parallel zusammengeschaltet, und zwar mit dem, welches im äußeren Bereich des Kreises dem zugehörigen gleichnamigen Abtastfeld C1 am nächsten liegt. Deshalb werden diese Abtastfelder als die "nächst äußeren" bezeichnet.

Auf diese Weise werden in beiden Gruppen 1 und 2 von Abtastfeldern A1 bis D2 parallel geschaltete Paare gebildet.

Innerhalb jeder Gruppe 1 bzw. 2 werden die Paare antiparallel geschaltet, so daß jeweils das Paar des innersten Abtastfeldes (C1 bzw. B2) mit dem Paar des äußersten Abtastfeldes (A1 bzw. D2) in seiner Gruppe antiparallel geschaltet ist.

Die auf die beschriebene Art und Weise "mehrfach über Kreuz" geschalteten Abtastfelder A1 bis D2 liefern nach Verstärkung in Verstärkern 11 und 22 die vorbeschriebenen Meßsignale U1 und U2, die in weiten Grenzen unempfindlich sind gegen einen um laufenden Exzentrizitätsvektor, so daß sie hoch interpolierbar sind.

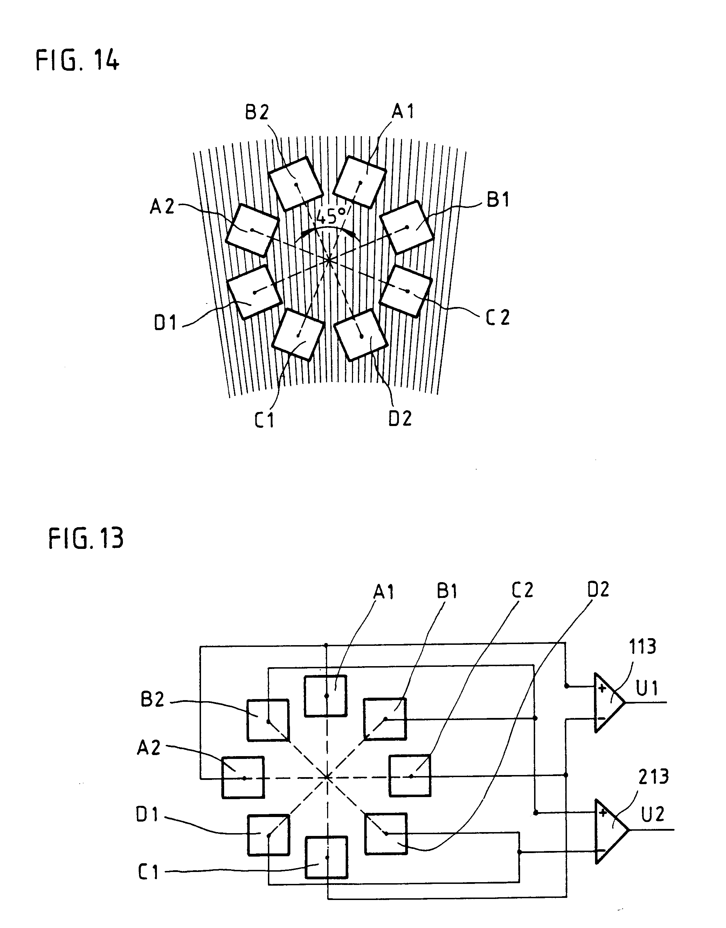

In Analogie zu den vorbeschriebenen Beispielen zeigen die Figuren 11 bzw. 14 Abtaststellen, mit acht Abtastfeldern A1 bis D2, deren Flächenschwerpunkte konzentrisch auf einem Kreis um das nicht näher bezeichnete Zentrum der Abtaststelle liegen. Von imaginären Verbindungslinien - die gestrichelt dargestellt sind - wird der Kreis in acht gleiche Segmente aufgeteilt. Dabei wechseln sich die Abtastfelder A1 bis D2 ab, die das Signal U1 bzw. das dazu 90° phasenverschobene Signal U2 bilden.

In Figur 12 ist ein entsprechendes Blockschaltbild dargestellt.

Von den Gruppen 1 und 2 sind die sich gegenüberliegenden Abtastfelder A1 und A2 parallel geschaltet und liegen am positiven Eingang eines Verstärkers 112 an. Zwei andere Abtastfelder der Gruppen 1 und 2, nämlich die sich ebenfalls gegenüberliegenden Abtastfelder C1 und C2 sind ebenfalls parallel geschaltet, liegen jedoch am negativen Eingang des Verstärkers 112 an; sie sind also antiparallel zu den beiden Abtastfeldern A1 und A2 geschaltet.

Bei den weiteren Abtastfeldern der Gruppen 1 und 2 verhält es sich ähnlich. Zwei sich gegenüberliegende Abtastfelder B1 und B2 sind parallel am positiven Eingang eines zweiten Verstärkers 212 angeschlossen. Die beiden Abtastfelder D1 und D2 sind parallel geschaltet und liegen am negativen Eingang des Verstärkers 212 an, sind also antiparallel zu dem erstgenannten Paar geschaltet.

Wie das Blockschaltbild aus Figur 13 zeigt, ist auch die Art der Zusammenschaltung variabel. Wieder werden Paare A1, A2; C1, C2; B1, B2; D1, D2 gebildet, die parallel bzw. antiparallel an Verstärker 113 und 213 geschaltet werden, um Signale U1 und U2 zu bilden.

Hier besteht eine Analogie zu den vorstehenden Ausführungsbeispielen, obwohl die geometrische Lage der Abtastfelder im Beispiel der Figur 12 von der des Beispiels aus Figur 13 abweicht. Auch hier wechseln sich die Abtastfelder A1 bis D2 - die zur Bildung der zueinander phasenverschobenen Signale beitragen - auf dem Kreis ab. Unabhängig davon, zu welcher Gruppe 1 oder 2 sie gehören. Das heißt, auf ein Abtastfeld, welches zur Bildung des Signales U1 beiträgt, folgt eines, welches zur Bildung des Signales U2 beiträgt, dann wieder eines für das Signal U1 u.s.w..

Der gemeinsame Kern der Abtastfeld- und Gruppenanordnung besteht bei allen Ausführungsformen darin, daß die Abtastfelder zwei Gruppen mit je vier Abtastfeldern bilden, und daß der Flächenschwerpunkt aller Abtastfelder der einen Gruppe gleich dem Flächenschwerpunkt aller Abtastfelder der anderen Gruppe ist, wobei die Abtastfelder der einen Gruppe um eine beliebige Achse durch diesen gemeinsamen Schwerpunkt das gleiche Flächenträgheitsmoment bilden, wie die Abtastfelder der anderen Gruppe.

Selbstverständlich können auch Gruppen mit mehr als vier Abtastfeldern gebildet werden, wenn dabei die Kernmerkmale erfüllt bleiben.

**Patentansprüche**

1.  Längen- oder Winkelmeßeinrichtung mit einer Meßteilung und wenigstens einer Abtasteinrichtung zum Abtasten der Meßteilung, bei der die Abtasteinrichtung mehrere, in Gruppen zusammengefaßte Abtastfelder aufweist, die in einer elektrischen Schaltung so zusammengeschaltet sind, daß von den Abtastfeldern gewonnene Abtastsignale in wenigstens zwei periodische, zueinander phasenverschobene analoge Meßsignale umgewandelt werden, dadurch gekennzeichnet, daß die Abtastfelder (A1 bis D2) wenigstens zwei Gruppen (1 und 2) mit je wenigstens vier (mehreren) Abtastfeldern (A1, B1, C1, D1 und A2, B2, C2, D2) bilden, und daß der Flächenschwerpunkt aller Abtastfelder (A1 bis D1) der einen Gruppe (1)gleich dem Flächenschwerpunkt aller Abtastfelder (A2 bis D2) der anderen Gruppe (2) ist, wobei die Abtastfelder (A1 bis D1)der einen Gruppe (1) um eine beliebige Achse durch diesen gemeinsamen Schwerpunkt das gleiche Flächenträgheitsmoment bilden, wie die Abtastfelder (A2 bis D2) der anderen Gruppe (2).

2.  Längen- oder Winkelmeßvorrichtung nach Anspruch 1, dadurch gekennzeichnet, daß die Schwerpunkte der Abtastfelder (A1 bis D2) konzentrisch auf einem Kreis um das Zentrum der Abtastung angeordnet sind, wobei imaginäre Verbindungslinien zwischen den Schwerpunkten den Kreis in gleiche Segmente aufteilen, daß sich auf dem Kreis 2n Abtastfelder (A1 bis D2) aus den beiden Gruppen (1 und 2) bei der Bildung der Meßsignale (U1, U2) abwechseln und daß aus den Gruppen der Abtastfelder (A1 bis D2) jeweils n Abtastfelder (A1, A2 bzw. B1, B2) parallel geschaltet und zu den restlichen n Abtastfeldern (C1, C2 bzw. D1, D2) antiparallel geschaltet sind.

3.  Längen- oder Winkelmeßvorrichtung nach Anspruch 1, dadurch gekennzeichnet, daß die Schwerpunkte der Abtastfelder (A1 bis D2) konzentrisch auf einem Kreis um das Zentrum der Abtastung angeordnet sind, wobei imaginäre Verbindungslinien zwischen den Schwerpunkten den Kreis in gleiche Segmente aufteilen, und daß aus den Gruppen (1 und 2) der 2n Abtastfelder (A1 bis D2) jeweils n sich gegenüber liegende Abtastfelder (A1, C1 bzw. A2. C2) einer Gruppe (1 bzw. 2) antiparallel geschaltet sind und mit den restlichen n ebenfalls antiparallel geschalteten Abtastfeldern (B1, D1 bzw. B2, D2) der jeweils anderen Gruppe parallel geschaltet sind.

4.  Längen- oder Winkelmeßvorrichtung nach Anspruch 1 mit einer Kreisteilung, dadurch gekennzeichnet, daß die Gruppen (1 und 2) in tangentialer Richtung benachbart und in radialer Richtung durch einen Kreis mit einem mittleren Teilkreisradius (R) in einen inneren und einen äußeren Teilkreisbereich aufgeteilt sind, und daß jeweils die äußeren Abtastfelder (A1, C1 bzw. B2, D2) einer Gruppe (1 bzw. 2) mit den inneren Abtastfeldern (A2, C2 bzw. B1, D1) der jeweils anderen Gruppe (2 bzw. 1) zusammengeschaltet sind, wobei jeweils n Abtastfelder (A1, A2 bzw. B1, B2) mit n anderen Abtastfeldern (C1, C2 bzw. D1, D2) antiparallel zusammengeschaltet sind.

**Claims**

1.  Length or angle measuring device with a measuring scale and at least one scanning device for scanning the measuring scale, in which the scanning device comprises several scanning areas which are combined into groups and which are interconnected in an electrical circuit in such a way that scan signals obtained from the scanning areas are converted to at least two periodic, out-of-phase, analogue measuring signals, characterised in that the scanning areas (A1 to D2) form at least two groups (1 and 2) each with at least four (several) scanning areas (A1, B1, C1, D1 and A2, B2, C2, D2), and in that the centre of gravity or the surface of all the scanning areas (A1 to D1) of one group (1) is equal to the centre of gravity of the surface of all the scanning areas (A2 to D2) of the other group (2), wherein the scanning areas (A1 to D1) of one group (1) form, about any axis through this common centre of gravity, the same geometrical moment of inertia as the scanning areas (A2 to D2) of the other group (2).

2.  Length or angle measuring device according to claim 1, characterised in that the centres of gravity of the scanning areas (A1 to D2) are arranged concentrically in a circle around the centre of scanning, wherein imaginary connecting lines between the centres of gravity divide the circle into equal segments, in that in the circle 2n scanning areas (A1 to D2) alternate from the two groups (1 and 2) on formation of the measuring signals (U1, U2) and in that from the groups of scanning areas (A1 to D2) in each case n scanning areas (A1, A2 or B1, B2) are connected in parallel and antiparallel with the remaining n scanning areas (C1, C2 or D1, D2).

3. Length or angle measuring device according to claim 1, characterised in that the centres of gravity of the scanning areas (A1 to D2) are arranged concentrically in a circle around the centre of scanning, wherein imaginary connecting lines between the centres of gravity divide the circle into equal segments, and in that from the groups (1 and 2) of the 2n scanning areas (A1 to D2) in each case n opposed scanning areas (A1, C1 or A2, C2) of one group (1 or 2) are connected in antiparallel and connected in parallel with the remaining n also antiparallel-connected scanning areas (B1, D1 or B2, D2) of the other group.

4. Length or angle measuring device according to claim 1 with a circular scale, characterised in that the groups (1 and 2) are adjacent in a tangential direction and divided in a radial direction by a circle with a mean graduated circle radius (R) into inner and outer graduated circle regions, and in that in each case the outer scanning areas (A1, C1 or B2, D2) of one group (1 or 2) are interconnected with the inner scanning areas (A2, C2 or B1, D1) of the other group (2 or 1), wherein in each case n scanning areas (A1, A2 or B1, B2) are interconnected antiparallel with n other scanning areas (C1, C2 or D1, D2).

## Revendications

1. Dispositif de mesure de longueurs ou d'angles comportant une graduation de mesure et au moins un dispositif de lecture pour la lecture de la graduation de mesure, dans lequel le dispositif de lecture présente plusieurs zones de lecture agencées en groupes qui sont connectées dans un circuit électrique de manière telle que des signaux de lecture formés par les zones de lecture sont transformés en au moins deux signaux de mesure analogiques, périodiques, mutuellement déphasés, caractérisé par le fait que les zones de lecture (A1 à D2) forment au moins deux groupes (1 et 2) avec chacun au moins quatre (plusieurs) zones de lecture (A1, B1, C1, D1 et A2, B2, C2, D2) et par le fait que le barycentre de toutes les zones de lecture (A1 à D1) de l'un des groupes (1) est identique au barycentre de toutes les zones de lecture (A2 à D2) de l'autre groupe (2), les zones de lecture (A1 à D1) de l'un des groupes (1) ayant, autour d'un axe quelconque passant par le barycentre commun, le même moment d'inertie de surface que les zones de lecture (A2 à D2) de l'autre groupe (2).

2. Dispositif de mesure de longueurs ou d'angles selon la revendication 1, caractérisé par le fait que les barycentres des zones de lecture (A1 à D2) sont disposés de manière concentrique sur un cercle autour du centre de la lecture, des droites imaginaires qui relient les barycentres divisant le cercle en segments identiques, par le fait que 2n zones de lecture (A1 à D2) appartenant aux deux groupes (1 et 2) alternent sur le cercle lors de la formation des signaux de mesure (U1, U2) et par le fait que n zones de lecture (A1, A2 ou B1, B2) des groupes des zones de lecture (A1 àD2) sont branchées en parallèle entre elles et anti-parallèles avec les autres n zones de lecture (C1, C2 OU D1, D2).

3. Dispositif de mesure de longueurs ou d'angles selon la revendication 1, caractérisé par le fait que les barycentres des zones de lecture (A1 à D2) sont disposés de manière concentrique sur un cercle autour du centre de la lecture, des droites imaginaires qui relient les barycentres divisant le cercle en segments identiques et par le fait que parmi les groupes (1 et 2) des 2n zones de lecture (A1 à D2) respectivement n zones de lecture (A1, C1 ou A2, C2) en vis-à-vis d'un groupe (1 ou 2) sont branchées de manière anti-parallèle entre elles et sont branchées en parallèle avec les n zones de lecture restantes (B1, D1 ou B2, D2) également branchées de manière anti-parallèle de l'autre groupe.

4. Dispositif de mesure de longueurs ou d'angles selon la revendication 1, comportant une division angulaire, caractérisé par le fait que les groupes (1 et 2) sont voisins dans la direction tangentielle et, dans la direction radiale, sont divisés par un cercle de rayon moyen (R) en une zone circulaire intérieure et une zone circulaire extérieure et par le fait que les zones de lecture extérieures (A1, C1 ou B2, D2) d'un groupe (1 ou 2) sont couplés aux zones de lecture intérieures (A2, C2 ou B1, D1) de l'autre groupe (2 ou 1), n zones de lecture (A1, A2 ou B1, B2) étant branchées de manière anti-parallèle avec n autres zones de lecture (C1, C2 ou D1, D2).

FIG. 1

# FIG. 2

# FIG. 3

# FIG. 4

# FIG. 5

# FIG. 6

FIG. 7

FIG. 8

FIG. 9

FIG. 10

9

FIG. 11

FIG. 12

FIG. 14

FIG. 13